# EUROPEAN PATENT SPECIFICATION

(11) **EP 3 512 290 B1**
(45) Date of publication and mention of the grant of the patent: **25.08.2021**
(21) Application number: 17854888.9
(22) Date of filing: 27.09.2017
(51) Int. Cl.: H04W 72/12

(54) **MESSAGE TRANSMISSION METHOD, DEVICE AND SYSTEM**
NACHRICHTENÜBERTRAGUNGSVERFAHREN, -VORRICHTUNG UND -SYSTEM
PROCÉDÉ, DISPOSITIF ET SYSTÈME DE TRANSMISSION DE MESSAGES

(30) Priority: 30.09.2016 CN 201610877439
(43) Date of publication of application: 17.07.2019
(73) Proprietor: Huawei Technologies Co., Ltd., Longgang District Shenzhen, Guangdong 518129 (CN)
(72) Inventor: YU, Feng, Shenzhen Guangdong 518129 (CN); XIONG, Xin, Shenzhen Guangdong 518129 (CN); YU, Haifeng, Shenzhen Guangdong 518129 (CN)
(74) Representative: Thun, Clemens
(86) International application number: PCT/CN2017/103661
(87) International publication number: WO 2018/059438

(56) References cited:
- EP-A2- 2 701 319
- CN-A- 105 191 199
- US-A1- 2010 197 313
- US-A1- 2012 244 866
- US-A1- 2016 142 184
- US-A1- 2016 150 475
- CMCC: "Clarifications on RRC processing delay", 3GPP DRAFT; R2-090509 CLARIFICATIONS ON RRC PROCESSING DELAY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Ljubljana; 20090106, 6 January 2009 (2009-01-06), XP050322435, [retrieved on 2009-01-06]
- PANASONIC: "Report of Offline Discussion about Definition of RRC Procedure Delay", R2-084850 TSG-RAN Working Group 2 Meeting #63, 22 August 2008 (2008-08-22), XP050319785,

## Description

### TECHNICAL FIELD

Embodiments of this application relate to the communications field, and more specifically, to a message transmission method, a device, and a system.

### BACKGROUND

In a Long Term Evolution (LTE) system, user equipment (UE) needs to perform a radio resource control (RRC) connection setup process, connection resume process, connection reestablishment process, or connection reconfiguration process when entering a connected mode from an idle mode. The RRC connection resume process is used as an example. A communication process of an air interface of the RRC connection resume process is as follows:
(1) A random access process is initialized, and the UE selects a physical random access channel (PRACH) resource and a corresponding preamble code.
(2) The UE sends a preamble on the PRACH resource.
(3) A network device processes the received preamble.
(4) The network device returns a random access response (RAR) message.
(5) The UE receives and processes the RAR message, and the RAR message includes an uplink grant (UL grant) of a next uplink message.
(6) The UE sends an RRC connection resume request message on the UL grant.
(7) The network device processes the RRC connection resume request message after receiving the RRC connection resume request message.
(8) The network device returns an RRC connection resume message.
(9) The UE receives and processes the RRC connection resume message.
(10) The UE sends an RRC connection resume complete message.

The RRC connection setup process, the RRC connection reconfiguration process, and the RRC connection reestablishment process in LTE are similar to the foregoing process, and a difference lies only in that a specific message is a message related to a connection process or connection reestablishment.

The RRC protocol in LTE stipulates that a processing delay after the UE receives the RRC connection resume message in step 9 is 15 ms, while in 5G, it is required that a control plane delay from the idle mode to the connected mode be 10 ms. Therefore, the current RRC connection resume process, RRC connection setup process, RRC connection reconfiguration process, or RRC connection reestablishment process in LTE does not meet a 5G delay requirement.

US 2010/0197313A1 refers to a method that includes receiving a radio resource control message for which a response message is required to be transmitted to a network access node; performing at least one procedure specified by the radio resource control message; and transmitting the response message using network radio resources that are received in a non-solicited manner from the network access node. Also disclosed is an apparatus that includes a controller configured to operate with a radio frequency receiver and a radio frequency transmitter. The controller is further configured to transmit a radio resource control message for which a response message is required to be received from a user equipment, and to specify to the user equipment in an un-solicited manner those network radio resources to be used by the user equipment for transmitting the response message.

Therefore, a proper solution is required to shorten a processing delay of receiving and processing an RRC signaling message by the UE.

### SUMMARY

Embodiments of this application provide a message transmission method, a device, and a system, to reduce a delay generated between receiving an RRC downlink message and feeding back an RRC uplink response message by UE, so that a control plane delay can meet a shorter delay requirement.

This problem is solved by the subject matter of the claims.

In a first aspect, the invention provides a network device according to claim 1, the network device comprising: a sending module, configured to send a radio resource control, RRC, downlink message to a user equipment, UE; a processing module, configured to preallocate, within a time range of a radio resource control procedure delay, RRC procedure delay, of the RRC downlink message, an uplink grant of an RRC uplink response message corresponding to the RRC downlink message, wherein the sending module is further configured to send the uplink grant within the time range of the RRC procedure delay to the UE; and a receiving module, configured to: to receive, on an uplink resource indicated by the uplink grant, the RRC uplink response message on an RRC layer from the UE, receive an acknowledgement of the RRC downlink message from the UE, wherein: a sending time of the uplink grant is later than a sending time of the RRC downlink message and the sending time of the uplink grant is not later than a receiving time of the acknowledgement message of the RRC downlink message, when the RRC downlink message is sent in a transparent transmission mode, TM, the acknowledgement message of the RRC downlink message is a feedback message at a Medium Access Control, MAC, layer; when the RRC downlink message is sent in an acknowledged mode, AM, the acknowledgement message of the RRC downlink message is a feedback message at a Radio Link Control, RLC, layer.

In a second aspect, the invention provides a user equipment according to claim 2, the user equipment comprising: a receiving module, configured to: receive a radio resource control, RRC, downlink message sent by a network device, receive, within a time range of a radio resource control procedure delay, RRC procedure delay, of the RRC downlink message, an uplink grant that is of an RRC uplink response message corresponding to the RRC downlink message and that is preallocated and sent by the network device; a processing module, configured to determine an uplink resource indicated by the uplink grant; and a sending module, configured to: send the RRC uplink response message on an RRC layer on the uplink resource indicated by the uplink grant to the network device, send an acknowledgement of the RRC downlink message to the network device, wherein: a receiving time of the uplink grant is later than a receiving time of the RRC downlink message and the receiving time of the uplink grant is not later than a sending time of the acknowledgement message of the RRC downlink message, when the RRC downlink message is sent in a transparent transmission mode, TM, the acknowledgement message of the RRC downlink message is a feedback message at a Medium Access Control, MAC, layer; and when the RRC downlink message is sent in an acknowledged mode, AM, the acknowledgement message of the RRC downlink message is a feedback message at a Radio Link Control, RLC, layer.

In a third aspect, the invention provides a message transmission method according to claim 3, the message transmission method comprising: sending a radio resource control, RRC, downlink message to a user equipment, UE; preallocating, within a time range of a radio resource control procedure delay, RRC procedure delay, of the RRC downlink message, an uplink grant of an RRC uplink response message corresponding to the RRC downlink message; sending the uplink grant within the time range of the RRC procedure delay to the UE; and receiving, on an uplink resource indicated by the uplink grant, the RRC uplink response message on an RRC layer from the UE, receiving an acknowledgement of the RRC downlink message from the UE, wherein: a sending time of the uplink grant is later than a sending time of the RRC downlink message and the sending time of the uplink grant is not later than a receiving time of the acknowledgement message of the RRC downlink message, when the RRC downlink message is sent in a transparent transmission mode, TM, the acknowledgement message of the RRC downlink message is a feedback message at a Medium Access Control, MAC, layer; when the RRC downlink message is sent in an acknowledged mode, AM, the acknowledgement message of the RRC downlink message is a feedback message at a Radio Link Control, RLC, layer.

In a fourth aspect, the invention provides a message transmission method according to claim 4, the message transmission method comprising: receiving a radio resource control, RRC, downlink message sent by a network device, receiving, within a time range of a radio resource control procedure delay, RRC procedure delay, of the RRC downlink message, an uplink grant that is of an RRC uplink response message corresponding to the RRC downlink message and that is preallocated and sent by the network device; determining an uplink resource indicated by the uplink grant; and sending the RRC uplink response message on an RRC layer on the uplink resource indicated by the uplink grant to the network device, send an acknowledgement of the RRC downlink message to the network device, wherein: a receiving time of the uplink grant is later than a receiving time of the RRC downlink message and the receiving time of the uplink grant is not later than a sending time of the acknowledgement message of the RRC downlink message, when the RRC downlink message is sent in a transparent transmission mode, TM, the acknowledgement message of the RRC downlink message is a feedback message at a Medium Access Control, MAC, layer; and when the RRC downlink message is sent in an acknowledged mode, AM, the acknowledgement message of the RRC downlink message is a feedback message at a Radio Link Control, RLC, layer.

In a fifth aspect, the invention provides a computer-readable storage medium comprising instructions which, when executed by a computer, cause the computer to carry out the method according to claim 3 or 4.

Based on the foregoing technical solutions, the uplink grant of the RRC uplink response message is sent at a time that is not later than the receiving time of the acknowledgement message of the RRC downlink message, so that when sending the RRC uplink response message, the UE does not need to wait for the network device to allocate the uplink grant. Therefore, a delay generated between receiving the RRC downlink message and feeding back the RRC uplink response message by the UE is reduced, so that a control plane delay can meet a shorter delay requirement.

### BRIEF DESCRIPTION OF DRAWINGS

FIG. 1 is an interaction flowchart of an RRC resume process in the prior art;
FIG. 2 is a flowchart of an RRC message transmission method according to an embodiment of this application;
FIG. 3 is an interaction flowchart of an RRC process according to an embodiment of this application;
FIG. 4 is an interaction flowchart of an RRC process according to another embodiment of this application;
FIG. 5 is an interaction flowchart of an RRC process according to still another embodiment of this application;
FIG. 6 is an interaction flowchart of an RRC process according to still another embodiment of this application;
FIG. 7 is an interaction flowchart of an RRC process according to still another embodiment of this application;
FIG. 8 is an interaction flowchart of an RRC process according to still another embodiment of this application;
FIG. 9 is an interaction flowchart of an RRC process according to still another embodiment of this application;
FIG. 10 is a schematic structural diagram of a network device according to an embodiment of this application;
FIG. 11 is a schematic structural diagram of user equipment according to an embodiment of this application;
FIG. 12 is a schematic structural diagram of a network device according to another embodiment of this application;
FIG. 13 is a schematic structural diagram of user equipment according to another embodiment of this application; and
FIG. 14 is a system block diagram of a communications system according to an embodiment of this application.

### DESCRIPTION OF EMBODIMENTS

The following describes technical solutions of this application with reference to accompanying drawings.

The technical solutions of this application may be applied to various communications systems, such as a Global System for Mobile Communications (GSM), a Code Division Multiple Access (CDMA) system, a Wideband Code Division Multiple Access (WCDMA) system, a general packet radio service (GPRS), and a Long Term Evolution (LTE) system.

User equipment (UE) may also be referred to as a mobile terminal, an access terminal, a subscriber unit, a subscriber station, a mobile station, a mobile console, a remote station, a remote terminal, a mobile device, a user terminal, a terminal, a wireless communications device, a user agent, a user apparatus, or the like. The access terminal may be a cellular phone, a cordless phone, a Session Initiation Protocol (SIP) phone, a wireless local loop (WLL) station, a personal digital assistant (PDA), a handheld device having a wireless communication function, a computing device, another processing device connected to a wireless modem, an in-vehicle device, a wearable device, a terminal device in a future 5G network, or a terminal device in a future evolved public land mobile network (PLMN).

A network device may be a device configured to communicate with a mobile device, and the network device may be a base transceiver station (BTS) in a Global System for Mobile Communications (GSM) or Code Division Multiple Access (CDMA); or may be a NodeB (NB) in Wideband Code Division Multiple Access (WCDMA); or may be an evolved NodeB (eNB or eNodeB) in Long Term Evolution (LTE), an access point, an in-vehicle device, a wearable device, a network device in a future 5G network, or a network device in a future evolved public land mobile network (PLMN).

Before embodiments provided in this application are described, for ease of understanding, technical terms in the embodiments of this application are first described by using an LTE system as an example.

Radio link control (RLC): Each RLC entity is configured by an RRC, and includes three modes based on a service type: a transparent mode (TM), an unacknowledged mode (UM), and an acknowledged mode (AM). On a control plane, a service provided by an RLC layer for an upper layer is a signaling radio bearer (SRB). On a user plane, when the Packet Data Convergence Protocol (PDCP) and the Broadcast/Multicast Control (BMC) are not used by the service, the RLC layer provides a radio bearer (RB) for the upper layer. Otherwise, an RB service is carried by the PDCP or the BMC.

Transparent mode (TM): A sending entity adds no additional control protocol overheads to higher-layer data, and determines, based on only a service type, whether to perform a segmentation operation. If an error occurs in a protocol data unit (PDU) received by a receiving entity, the receiving entity submits the protocol data unit after error marking is performed on the protocol data unit, or directly discards the protocol data unit and reports a discarding result to a higher layer, based on configuration. A service in the TM includes a real-time voice service and the like.

Unacknowledged mode (UM): A sending entity adds necessary control protocol overheads to a higher-layer PDU, then transmits the higher-layer PDU but does not ensure that the higher-layer PDU is transmitted to a peer entity, and no retransmission protocol is used. After marking received error data as an error, a receiving entity submits the higher-layer PDU, or directly discards the higher-layer PDU and reports a discarding result to a higher layer. Because an RLC PDU includes a sequence number, integrity of the higher-layer PDU can be detected. A service in the UM includes a cell broadcast, an IP phone, and the like.

Acknowledged mode (AM): After adding necessary control protocol overheads to a higher-layer PDU, a sending entity transmits the higher-layer PDU and ensures that the higher-layer PDU is transmitted to a peer entity. Because an RLC layer in the AM has an automatic repeat request capability, if an RLC layer receives an incorrect RLC PDU, the RLC layer instructs an RLC layer of a sending party to retransmit the PDU. Because the RLC PDU includes sequence number information, the RLC layer in the AM further supports data submission to a higher layer in order/disorder. The AM is a standard mode of a packet data transmission service, and a service in the AM includes WWW, email downloading, and the like.

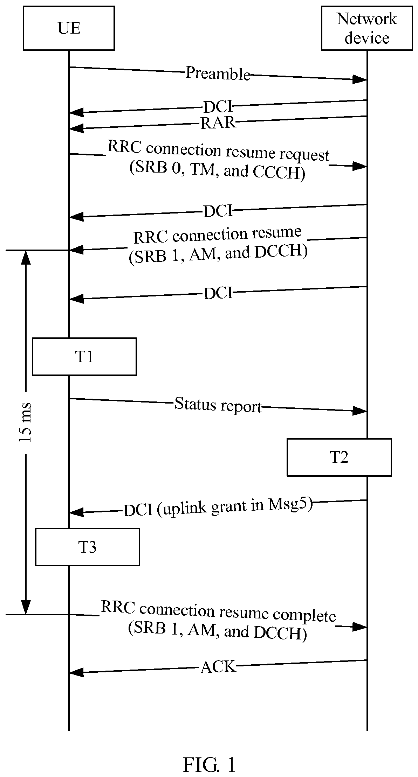

FIG. 1 is an interaction flowchart of an RRC resume process in LTE in the prior art. As shown in FIG. 1, in the RRC resume process in LTE, after receiving an RRC downlink message, namely, an RRC connection resume message, sent by a network device, UE first performs cyclic redundancy check (CRC) decoding at a physical layer, and feeds back an acknowledgement (ACK) message after correct decoding; otherwise, the UE feeds back a negative acknowledgement (NACK) message. If an RLC layer on the network device performs segmentation transmission on the RRC connection resume message, in addition to performing ACK/NACK feedback on each physical packet at the physical layer, the UE needs to determine, at an RLC layer based on a status of setting a polling bit in an RLC header by the network device, whether to feed back a status report. If the network device sets a polling bit in an RLC header of a last segment at the RLC layer to 1, the UE feeds back the status report. During implementation, after setting the polling bit, the network device knows that the UE is to send the status report. Therefore, after sending the downlink RRC connection resume message, the network device may send DCI for uplink scheduling, to schedule an uplink resource for sending the status report, and the UE sends the status report after receiving a last RLC PDU. It is assumed that all packets are correctly transmitted. After receiving the status report and determining that the RRC connection resume message is correctly received, the network device sends DCI that is for uplink scheduling and that includes a UL grant for sending an RRC connection resume complete message. After successfully sending the status report, the UE receives the DCI for scheduling the RRC connection resume complete message, and sends the RRC connection resume complete message after decoding succeeds.

As shown in the interaction flowchart in FIG. 1, it takes about 15 ms from receiving the RRC connection resume message by the UE to sending the RRC connection resume complete message by the UE, while in 5G, it is required that a control plane delay from an idle mode to a connected mode be 10 ms. Therefore, the current RRC resume process in LTE cannot meet a control plane delay requirement in 5G. An RRC connection setup process, an RRC connection reconfiguration process, or an RRC connection reestablishment process in LTE is similar to the RRC connection resume process, and cannot meet the control plane delay requirement in 5G.

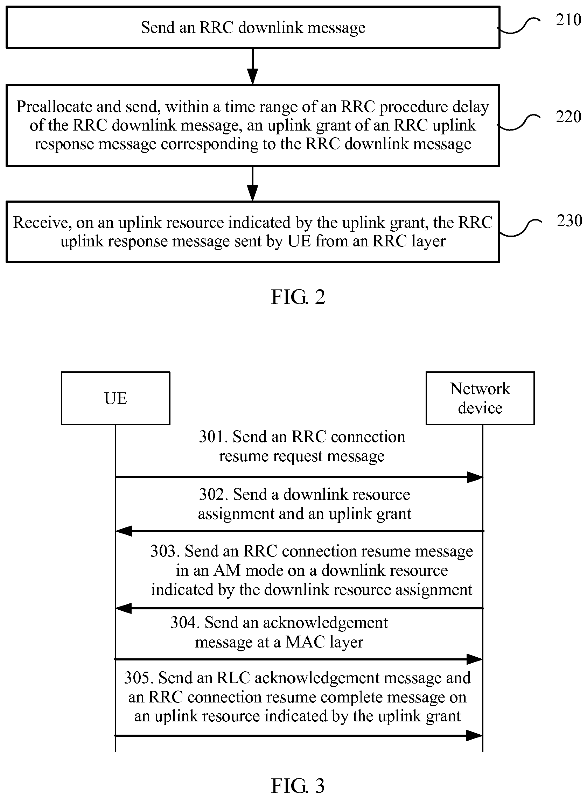

FIG. 2 is a flowchart of a message transmission method according to an embodiment of this application. The method in FIG. 2 is performed by a network device. The method in FIG. 2 includes the following steps.

210. Send an RRC downlink message.

The network device may send the RRC downlink message to UE.

220. Preallocate and send, within a time range of an RRC procedure delay of the RRC downlink message, an uplink grant of an RRC uplink response message corresponding to the RRC downlink message.

It should be understood that in this embodiment of this application, the uplink grant (UL grant) is used to indicate an uplink scheduling resource allocated by the network device to the RRC uplink response message.

It should be understood that in this embodiment of this application, that the network device preallocates and sends, within the time range of the RRC procedure delay of the RRC downlink message, the uplink grant of the RRC uplink response message corresponding to the RRC downlink message indicates that before receiving an acknowledgement message of the RRC downlink message, the network device preallocates the uplink grant to the RRC uplink response message corresponding to the RRC downlink message and sends the uplink grant to the UE.

It should be understood that in this embodiment of this application, the time range of the RRC procedure delay of the RRC downlink message includes a case in which the RRC procedure delay is 0. In this case, the uplink grant and the RRC downlink message are sent in a same subframe.

It should be understood that the RRC uplink response message is a feedback message sent by the UE from an RRC layer for the RRC downlink message. Specifically, the RRC downlink message and the RRC uplink response message belong to RRC process instances of a same RRC transaction identifier.

230. Receive, on an uplink resource indicated by the uplink grant, the RRC uplink response message sent by UE.

In this embodiment of this application, the network device preallocates the uplink grant of the RRC uplink response message within the time range of the RRC procedure delay and sends the uplink grant to the UE, so that when sending the RRC uplink response message, the UE does not need to wait for the network device to allocate the uplink grant. Therefore, a delay generated between receiving the RRC downlink message and feeding back the RRC uplink response message by the UE is reduced, so that a control plane delay can meet a shorter delay requirement.

Optionally, in an embodiment, when a sending time of the uplink grant is later than a sending time of the RRC downlink message, the sending time of the uplink grant is not later than a receiving time of an acknowledgement message of the RRC downlink message.

Optionally, in a specific implementation in this embodiment of this application, when the RRC downlink message is sent in an acknowledged mode (AM), the acknowledgement message of the RRC downlink message is a feedback message at a Radio Link Control (RLC) layer.

Alternatively, optionally, in another specific implementation in this embodiment of this application, when the RRC downlink message is sent in a TM, the acknowledgement message of the RRC downlink message is a feedback message at a Medium Access Control (MAC) layer.

Optionally, in another embodiment, step 220 is specifically implemented as follows: sending the uplink grant on a physical downlink control channel (PDCCH) on which a downlink resource assignment (DL assignment) of the RRC downlink message is sent.

It should be understood that in this embodiment of this application, the uplink grant of the RRC uplink response message and the downlink resource assignment (DL assignment) of the RRC downlink message may be sent on a same physical downlink control channel (PDCCH). For example, the network device may send the uplink grant of the RRC uplink response message together with the downlink resource assignment of the RRC downlink message to the UE by using same downlink control information (DCI).

In this embodiment of this application, the uplink grant of the RRC uplink response message and the downlink resource assignment of the RRC downlink message are sent to the UE in a same message, so that the UE can obtain the uplink grant of the RRC uplink response message before sending the acknowledgement message of the RRC downlink message, thereby saving a time at which the UE waits for the network device to allocate the uplink grant of the RRC uplink response message.

Optionally, in another embodiment, step 220 is specifically implemented as follows: sending the uplink grant in a message packet for sending the RRC downlink message.

It should be understood that the message packet may be in a data format of a Medium Access Control (MAC) protocol data unit (PDU).

The MAC PDU includes a character string that is byte (8 bits) aligned. One MAC PDU may include one MAC header, zero to more MAC SDUs, zero to more MAC control elements, and possible padding.

In this embodiment of this application, the RRC downlink message is stored in a MAC service data unit (SDU) in the MAC PDU, and the uplink grant is stored in a MAC control element (CE) in the MAC PDU.

Optionally, in an embodiment, when the RRC downlink message is sent in an AM, the MAC SDU in the message packet stores a segmented data packet obtained after RLC segmentation is performed on the RRC downlink message.

It should be understood that the segmented data packet may be any data packet obtained after the RLC segmentation is performed on the RRC downlink message. For example, the uplink grant may be delivered together with a first packet obtained after the RLC segmentation is performed on the RRC downlink message, or may be delivered together with a last packet obtained after the RLC segmentation is performed on the RRC downlink message.

Alternatively, optionally, in another embodiment, when the RRC downlink message is sent in a TM, the MAC SDU in the message packet stores all content of the RRC downlink message.

It should be understood that when the RRC downlink message is sent in the TM, all the content of the RRC downlink message is transmitted by using a same MAC PDU, and the MAC PDU further carries information about the uplink grant.

In this embodiment of this application, the uplink grant of the RRC uplink response message and the RRC downlink message are sent to the UE in a same message, so that the UE receives the uplink grant of the RRC uplink response message while receiving the RRC downlink message, thereby saving a time at which the UE waits for the network device to allocate the uplink grant of the RRC uplink response message.

Optionally, when the network device sends the uplink grant together with the RRC downlink message or the downlink resource assignment of the RRC downlink message, the RRC uplink response message is further used to indicate that receiving of the RRC downlink message is acknowledged by the UE, and the UE does not send an acknowledgement message of the RRC downlink message.

It should be understood that when the network device sends the uplink grant together with the RRC downlink message or the downlink resource assignment of the RRC downlink message, a value of the radio resource control procedure delay RRC procedure delay may be 0. Certainly, the value of the radio resource control procedure delay RRC procedure delay may be greater than 0.

It should be understood that when the RRC downlink message is sent in the AM, the RRC downlink message may be an RRC connection resume message, and the RRC uplink response message may be an RRC connection resume complete message; or the RRC downlink message may be an RRC connection reconfiguration message, and the RRC uplink response message may be an RRC connection reconfiguration complete message, or the like. Certainly, there may be another RRC connection process in which an RRC message is transmitted in the AM. Details are not described in this embodiment of this application.

It should be understood that when the RRC downlink message is sent in the TM, the RRC downlink message may be an RRC connection resume message, and the RRC uplink response message may be an RRC connection resume complete message; or the RRC downlink message may be an RRC connection reconfiguration message, and the RRC uplink response message may be an RRC connection reconfiguration complete message, or the like. Similarly, there may be another RRC connection process in which an RRC message is transmitted in the TM. Details are not described in this embodiment of this application.

It should be understood that when the RRC downlink message is sent in the AM, the downlink resource assignment of the RRC downlink message includes a plurality of downlink resource assignments, and the downlink resource assignment carried in the first message may be any one of the plurality of downlink resource assignments.

Alternatively, when the RRC downlink message is sent in the TM, the downlink resource assignment of the RRC downlink message includes one downlink resource assignment, and the uplink grant of the RRC uplink response message is delivered together with the downlink resource assignment.

Certainly, it should be understood that some RRC processes start with an RRC request message. In this case, before step 210, the method may further include: receiving an RRC request message sent by the UE.

After receiving the RRC request message sent by the UE, the network device may send, to the UE, the RRC downlink message corresponding to the RRC request message. Certainly, it should be understood that the network device may actively send the RRC downlink message to the UE. This is not limited in this embodiment of this application.

It should be understood that the RRC request message is corresponding to the RRC downlink message and the RRC uplink response message, and the RRC request message, the RRC downlink message, and the RRC uplink response message belong to RRC process instances of a same RRC transaction identifier. For example, when the RRC downlink message is an RRC connection resume message, and the RRC uplink response message is an RRC connection resume complete message, the RRC request message is an RRC connection resume request message. Alternatively, when the RRC downlink message is an RRC connection setup message, and the RRC uplink response message is an RRC connection setup complete message, the RRC request message is an RRC connection setup request message. Alternatively, when the RRC downlink message is an RRC connection reestablishment message, and the RRC uplink response message is an RRC connection reestablishment complete message, the RRC request message is an RRC connection reestablishment request message, or the like.

It should be understood that in the embodiment shown in FIG. 2, after step 220, if the network device receives a NACK message sent by the UE from the MAC layer or the RLC layer, the network device may determine that the UE fails to receive or decode the RRC downlink message, and may not perform step 230.

The following further describes the method in this embodiment of this application with reference to specific embodiments.

FIG. 3 is an interaction flowchart of an RRC process according to an embodiment of this application. This embodiment of this application is described by using an RRC connection resume process as an example. As shown in FIG. 3, the method includes the following steps.

301. UE sends an RRC connection resume request message to a network device.

The UE may send the RRC connection resume request message to the network device.

It should be understood that in this embodiment of this application, for step 301 and steps performed by the network device and the UE before step 301, refer to the prior art. Details are not described herein in this embodiment of this application.

302. The network device sends a downlink resource assignment and an uplink grant.

After successfully receiving the RRC connection resume request message sent by the UE, the network device may send an uplink grant (UL grant) of an RRC uplink response message while sending a downlink resource assignment (DL assignment) of an RRC downlink message to the UE.

Specifically, in this embodiment of this application, the network device may send a DL assignment of an RRC connection resume message and a UL grant of an RRC connection resume complete message to the UE. The network device may send the DL assignment and the UL grant by using a same DCI message.

It should be understood that after successfully decoding the DCI, the UE may obtain the DL assignment, where the DL assignment indicates a downlink resource used to receive the RRC connection resume message, and the UE may further obtain the UL grant, where the UL grant indicates an uplink resource used to send the RRC connection resume complete message.

303. The network device sends an RRC connection resume message in an AM on a downlink resource indicated by the downlink resource assignment.

The network device may send the RRC connection resume message to the UE on the downlink resource indicated by the DL assignment of the RRC connection resume message.

It should be understood that in the RRC connection resume process, an RLC layer of the network device sends the RRC connection resume message in the AM. The RLC layer of the network device performs segmentation transmission on the RRC connection resume message, and sets a polling bit in an RLC header of a last segment at the RLC layer to 1. If the network device sets the polling bit in the RLC header of the last segment at the RLC layer to 1, the UE feeds back an acknowledgement message at an RLC layer.

304. The UE sends an acknowledgement message at a MAC layer.

After obtaining the DL assignment through decoding, the UE may receive, on the downlink resource indicated by the DL assignment, the RRC connection resume message sent by the network device.

When the network device sends the RRC connection resume message in the AM at the RLC layer, the UE receives a plurality of physical packets of the RRC connection resume message at a physical layer, namely, the MAC layer, and the UE needs to perform ACK/NACK feedback on each physical packet. The ACK/NACK feedback may be referred to as the acknowledgement message at the MAC layer.

305. The UE sends an RLC acknowledgement message and an RRC connection resume complete message on an uplink resource indicated by the uplink grant.

When the RLC layer of the network device performs segmentation transmission on the RRC connection resume message, the UE needs to feed back the RLC acknowledgement message at the RLC layer in addition to performing ACK/NACK feedback on each physical packet at the MAC layer.

The UE may determine, based on a status of setting a polling bit in an RLC header by the network device, whether to feed back the RLC acknowledgement message. If the network device sets the polling bit in the RLC header of the last segment at the RLC layer to 1, the UE needs to feed back the RLC acknowledgement message.

Optionally, the UE may send the RRC connection resume complete message on the uplink resource indicated by the uplink grant, and further send the RLC acknowledgement message on the uplink resource indicated by the uplink grant. In other words, the UE may send the RRC connection resume complete message and the RLC acknowledgement message on the uplink resource indicated by the uplink grant. Specifically, the RLC acknowledgement message may be a status report of the RRC connection resume message. In this embodiment of this application, the RRC connection resume complete message and the status report may be sent by using a same MAC PDU.

Certainly, it should be understood that the RRC connection resume complete message and the RLC acknowledgement message may be separately sent. For example, the RRC connection resume complete message may be sent before the RLC acknowledgement message or after the RLC acknowledgement message, or the like. A sending time of the RRC connection resume complete message depends on a time at which the uplink resource indicated by the UL grant allocated by the network device for the RRC connection resume complete message is located.

In this embodiment of this application, the uplink grant of the RRC connection resume complete message and the downlink resource assignment of the RRC connection resume message are sent together. Therefore, it can be ensured that the uplink grant is sent at a time that is not later than a receiving time of the acknowledgement message of the RRC connection resume message, so that when sending the RRC connection resume complete message, the UE does not need an additional delay of waiting for the network device to configure the uplink grant, thereby reducing a control plane delay on the UE.

In addition, in this embodiment of this application, when the RRC connection resume message is transmitted in the AM, the UE sends the RLC acknowledgement message of the RRC connection resume message together with the RRC connection resume complete message on the uplink resource indicated by the uplink grant, so that overheads of the uplink scheduling resource can be further reduced.

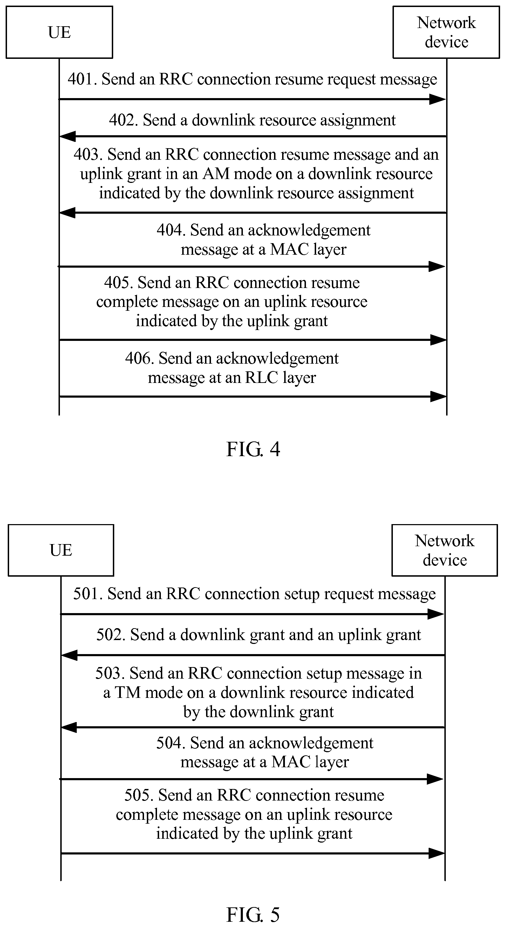

FIG. 4 is an interaction flowchart of an RRC process according to another embodiment of this application. This embodiment of this application is described by using an RRC connection resume process as an example. As shown in FIG. 4, the method includes the following steps.

401. UE sends an RRC connection resume request message to a network device.

The UE may send the RRC connection resume request message to the network device, to request to initiate the RRC connection resume process.

It should be understood that in this embodiment of this application, for step 401 and steps performed by the network device and the UE before step 401, refer to the prior art. Details are not described herein in this embodiment of this application.

402. The network device sends a downlink resource assignment.

After successfully receiving the RRC connection resume request message sent by the UE, the network device may send a downlink resource assignment (DL assignment) of an RRC downlink message to the UE.

Specifically, in this embodiment of this application, the network device may send a DL assignment of an RRC connection resume message to the UE. The network device may send the DL assignment by using a same DCI message. For specific implementation thereof, refer to the prior art.

It should be understood that after successfully decoding the DCI, the UE may obtain the DL assignment, and the DL assignment indicates a downlink resource used to receive the RRC connection resume message.

403. The network device sends an RRC connection resume message and an uplink grant in an AM on a downlink resource indicated by the downlink resource assignment.

In this embodiment of this application, the network device sends the RRC connection resume message and a UL grant of an RRC connection resume complete message on the downlink resource indicated by the DL assignment.

Specifically, the UL grant may be combined, in a form of a MAC control element, with the RRC connection resume message to form a MAC PDU, and then the MAC PDU is sent to the UE.

Similar to step 303, an RLC layer of the network device may send the RRC connection resume message in the AM, to be specific, the RLC layer of the network device transmits the MAC PDU in the AM. In this embodiment of this application, the RLC layer of the network device performs segmentation transmission on the RRC connection resume message, and sets a polling bit in an RLC header of a last segment at the RLC layer to 1. If the network device sets the polling bit in the RLC header of the last segment at the RLC layer to 1, the UE feeds back an acknowledgement message at an RLC layer.

It should be understood that in this embodiment of this application, the UL grant may be sent together with any segment obtained after RLC segmentation is performed on the RRC downlink message. For example, the UL grant may be sent together with a first segment obtained after the RLC segmentation is performed on the RRC downlink message, or the UL grant may be sent together with a last segment obtained after the RLC segmentation is performed on the RRC downlink message. The any segment obtained after the RLC segmentation is performed on the RRC downlink message includes some content of the RRC downlink message.

Correspondingly, the UE may obtain the DL assignment through decoding, and receive, on the downlink resource indicated by the DL assignment, the MAC PDU sent by the network device. The MAC PDU includes some content of the RRC connection resume message and the UL grant.

404. The UE sends an acknowledgement message at a MAC layer.

As described in step 304 in FIG. 3, when the network device sends the RRC connection resume message in the AM at the RLC layer, the UE receives a plurality of physical packets of the RRC connection resume message at a physical layer, namely, the MAC layer, and the UE needs to perform ACK/NACK feedback on each physical packet. The ACK/NACK feedback may be referred to as the acknowledgement message at the MAC layer.

405. The UE sends an RRC connection resume complete message on an uplink resource indicated by the uplink grant.

406. The UE sends an acknowledgement message at an RLC layer.

When the UE sends a last acknowledgement message at the MAC layer, it indicates that the UE receives the entire RRC connection resume message. In this case, the UE may send the acknowledgement message at the RLC layer.

It should be understood that a time of the uplink resource indicated by the uplink grant may be later than a time at which the UE sends the acknowledgement message at the MAC layer or may be earlier than a time at which the UE sends the acknowledgement message at the RLC layer.

In this embodiment of this application, the uplink grant of an RRC uplink response message and the RRC downlink message are sent to the UE in a same message, so that the UE receives the uplink grant of the RRC uplink response message while receiving the RRC downlink message, thereby saving a time at which the UE waits for the network device to allocate the uplink grant of the RRC uplink response message.

FIG. 5 is an interaction flowchart of an RRC process according to still another embodiment of this application. This embodiment of this application is described by using an RRC connection setup process as an example. As shown in FIG. 5, the method includes the following steps.

501. UE sends an RRC connection setup request message to a network device.

The UE may send the RRC connection setup request message to the network device, to request to initiate the RRC connection setup process.

It should be understood that in this embodiment of this application, for step 501 and steps performed by the network device and the UE before step 501, refer to the prior art. Details are not described herein in this embodiment of this application.

502. The network device sends a downlink resource assignment and an uplink grant.

After successfully receiving the RRC connection setup request message sent by the UE, the network device may send an uplink grant (UL grant) of an RRC uplink response message while sending a downlink resource assignment (DL assignment) of an RRC downlink message to the UE.

Specifically, in this embodiment of this application, the network device may send a DL assignment of an RRC connection setup message and a UL grant of an RRC connection setup complete message to the UE. The network device may send the DL assignment and the UL grant by using a same DCI message.

It should be understood that after successfully decoding the DCI, the UE may obtain the DL assignment used to receive the RRC connection setup message, and obtain the UL grant used to send the RRC connection setup complete message.

503. The network device sends an RRC connection setup message in a TM on a downlink resource indicated by the downlink resource assignment.

The network device may send the RRC connection setup message to the UE on the downlink resource indicated by the DL assignment of the RRC connection setup message.

It should be understood that in the RRC connection setup process, an RLC layer of the network device may send the RRC connection setup message in the TM.

Correspondingly, the UE may obtain the DL assignment through decoding, and receive, on the downlink resource indicated by the DL assignment, the RRC connection setup message sent by the network device. The RRC connection setup message may be transmitted in a data format of a MAC PDU.

504. The UE sends an acknowledgement message at a MAC layer.

If the UE correctly receives the RRC connection setup message, the UE may further feed back the acknowledgement message at the MAC layer, namely, an ACK/NACK message of the RRC connection setup message, on an uplink resource indicated by the UL grant.

505. The UE sends an RRC connection setup complete message on an uplink resource indicated by the uplink grant.

After receiving the RRC connection setup message on the downlink resource indicated by the DL assignment, the UE may send the RRC uplink response message, namely, the RRC connection setup complete message, on the uplink resource indicated by the UL grant.

In this embodiment of this application, the uplink grant of the RRC connection setup complete message and the downlink resource assignment of the RRC connection setup message are sent together. Therefore, it can be ensured that the uplink grant is sent at a time that is not later than a receiving time of the acknowledgement message of the RRC connection setup message, so that when sending the RRC connection setup complete message, the UE does not need an additional delay of waiting for the network device to configure the uplink grant, thereby reducing a control plane delay on the UE.

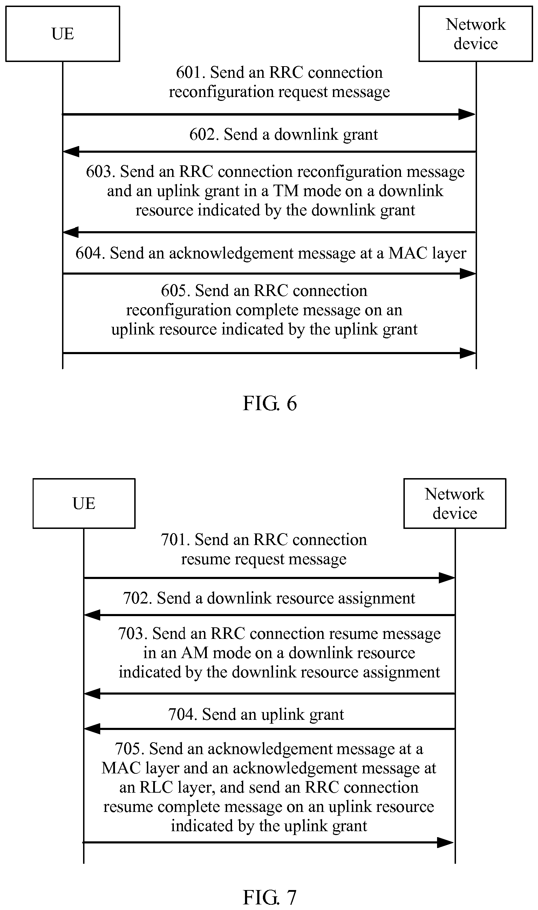

FIG. 6 is an interaction flowchart of an RRC process according to still another embodiment of this application. This embodiment of this application is described by using an RRC connection setup process as an example. As shown in FIG. 6, the method includes the following steps.

601. UE sends an RRC connection setup request message to a network device.

The UE may send the RRC connection setup request message to the network device, to request to initiate the RRC connection setup process.

It should be understood that in this embodiment of this application, for step 601 and steps performed by the network device and the UE before step 601, refer to the prior art. Details are not described herein in this embodiment of this application.

602. The network device sends a downlink resource assignment.

After successfully receiving the RRC connection setup request message sent by the UE, the network device may send a downlink resource assignment (DL assignment) of an RRC downlink message to the UE.

Specifically, in this embodiment of this application, the network device may send a DL assignment of an RRC connection setup message to the UE. The network device may send the DL assignment by using a same DCI message. For specific implementation thereof, refer to the prior art.

It should be understood that after successfully decoding the DCI, the UE may obtain the DL assignment used to receive the RRC connection setup message.

603. The network device sends an RRC connection setup message and an uplink grant in a TM on a downlink resource indicated by the downlink resource assignment.

In this embodiment of this application, the network device sends the RRC connection setup message and a UL grant of an RRC connection setup complete message in the TM on the downlink resource indicated by the DL assignment.

Specifically, the UL grant may be combined, in a form of a MAC control element, with the RRC connection setup message to form a MAC PDU, and then the MAC PDU is sent to the UE. The MAC PDU includes all content of the RRC connection setup message and the UL grant.

Correspondingly, the UE may obtain the DL assignment through decoding, and receive, on the downlink resource indicated by the DL assignment, the MAC PDU sent by the network device. The MAC PDU includes all content of the RRC connection setup message and the UL grant.

604. The UE sends an acknowledgement message at a MAC layer.

605. The UE sends an RRC connection setup complete message on an uplink resource indicated by the uplink grant.

For specific implementation of steps 604 and 605, refer to steps 504 and 505 in FIG. 5. Details are not described herein in this embodiment of this application.

In this embodiment of this application, the uplink grant of the RRC connection setup complete message and the downlink resource assignment of the RRC connection setup message are sent together, so that when sending the RRC connection setup complete message, the UE does not need an additional delay of waiting for the network device to configure the uplink grant. Therefore, the RRC connection setup complete message can be sent within a time range of an RRC procedure delay, thereby reducing a control plane delay on the UE.

FIG. 7 is an interaction flowchart of an RRC process according to an embodiment of this application. This embodiment of this application is described by using an RRC connection resume process as an example. As shown in FIG. 7, the method includes the following steps.

701. UE sends an RRC connection resume request message to a network device.

702. The network device sends a downlink resource assignment.

703. The network device sends an RRC connection resume message in an AM on a downlink resource indicated by the downlink resource assignment.

For specific implementation of steps 701 to 703, refer to the prior art. Details are not described herein in this embodiment of this application.

704. The network device sends an uplink grant.

After the network device sends the RRC connection resume message in the AM, the network device sends the uplink grant before receiving an RLC acknowledgement message.

It should be understood that in the RRC process, if the network device sends an RRC downlink message in a TM, the network device sends the uplink grant before receiving a MAC acknowledgement message.

705. The UE sends an acknowledgement message at a MAC layer and an acknowledgement message at an RLC layer, and sends an RRC connection resume complete message on an uplink resource indicated by the uplink grant.

For specific implementation of step 705, refer to steps 304 and 305 in FIG. 3 or steps 404 to 406 in FIG. 4. Details are not described herein in this embodiment of this application.

In this embodiment of this application, the uplink grant of the RRC connection resume complete message is sent after the RRC connection resume message and before the RLC acknowledgement message of the RRC connection resume message, so that when sending the RRC connection resume complete message, the UE does not need an additional delay of waiting for the network device to configure the uplink grant. Therefore, the RRC connection resume complete message can be sent within a time range of an RRC procedure delay, thereby reducing a control plane delay on the UE.

It should be understood that in the embodiments shown in FIG. 3 to FIG. 7, if the acknowledgement message at the MAC layer or the acknowledgement message at the RLC layer that is fed back by the UE includes a NACK message, it indicates that the UE does not correctly receive the RRC downlink message. In this case, the UE may not send an RRC uplink response message. Correspondingly, when the network device receives the NACK message sent by the UE from the MAC layer or the RLC layer, the network device may learn that the preallocated uplink grant is wasted.

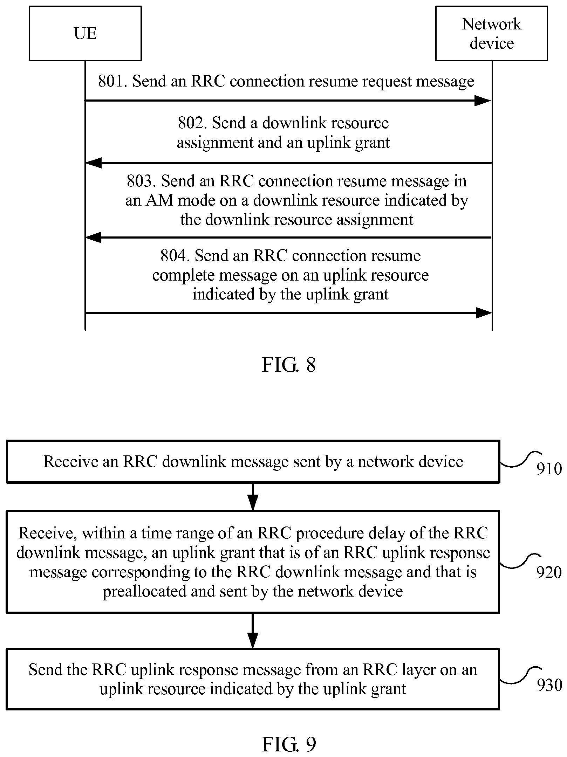

FIG. 8 is an interaction flowchart of an RRC process according to an embodiment of this application. This embodiment of this application is described by using an RRC connection resume process as an example. As shown in FIG. 8, the method includes the following steps.

801. UE sends an RRC connection resume request message to a network device.

802. The network device sends a downlink resource assignment and an uplink grant.

803. The network device sends an RRC connection resume message in an AM on a downlink resource indicated by the downlink resource assignment.

For specific implementation of steps 801 to 803, refer to steps 301 to 303 in FIG. 3. Details are not described herein in this embodiment of this application.

804. The UE sends an RRC connection resume complete message on an uplink resource indicated by the uplink grant.

In this embodiment of this application, after correctly receiving the RRC connection resume message sent by the network device, the UE may directly send the RRC connection resume complete message to the network device without sending an ACK message at a MAC layer and an ACK message at an RLC layer.

Correspondingly, after receiving the RRC connection resume complete message, the network device may determine that the RRC connection resume message is successfully sent.

Certainly, it should be understood that if the network device sends an RRC downlink message in a TM in the RRC process in this embodiment of this application, after the UE correctly receives the RRC downlink message sent by the network device, the UE may directly send an RRC uplink response message to the network device without sending the ACK message at the MAC layer.

In addition, it should be understood that procedures of steps 801 to 803 may also be replaced with the procedures shown in steps 401 to 403 in the embodiment shown in FIG. 4.

It should be understood that the RRC process in this application is not limited to the procedures shown in FIG. 3 to FIG. 8. For example, for specific implementation of an RRC process of sending the RRC downlink message in the TM such as an RRC connection reestablishment process, an RRC process of sending the RRC downlink message in the AM such as an RRC connection reconfiguration process, or the like, refer to the embodiments shown in FIG. 3 to FIG. 8. Details are not described herein in this embodiment of this application.

FIG. 9 is a flowchart of a message transmission method according to an embodiment of this application. The method in FIG. 9 is performed by UE. The method in FIG. 9 includes the following steps:
910. Receive an RRC downlink message sent by a network device.
920. Receive, within a time range of an RRC procedure delay of the RRC downlink message, an uplink grant that is of an RRC uplink response message corresponding to the RRC downlink message and that is preallocated and sent by the network device.
930. Send the RRC uplink response message from an RRC layer on an uplink resource indicated by the uplink grant.

In this embodiment of this application, the user equipment receives, within the time range of the RRC procedure delay, the uplink grant that is of the RRC uplink response message and that is preallocated and sent by the network device, so that when sending the RRC uplink response message, the user equipment does not need to wait for the network device to allocate the uplink grant. Therefore, a delay generated between receiving the RRC downlink message and feeding back the RRC uplink response message by the UE is reduced, so that a control plane delay can meet a shorter delay requirement.

Optionally, in an embodiment, when a receiving time of the uplink grant is later than a receiving time of the RRC downlink message, the receiving time of the uplink grant is not later than a sending time of an acknowledgement message of the RRC downlink message.

Optionally, in a specific implementation in this embodiment of this application, when the RRC downlink message is sent in an acknowledged mode (AM), the acknowledgement message of the RRC downlink message is a feedback message at a Radio Link Control (RLC) layer.

Alternatively, optionally, in another specific implementation in this embodiment of this application, when the RRC downlink message is sent in a TM, the acknowledgement message of the RRC downlink message is a feedback message at a Medium Access Control (MAC) layer.

Optionally, in another embodiment, step 920 is specifically implemented as follows: receiving the uplink grant on a physical downlink control channel (PDCCH) on which a downlink resource assignment of the RRC downlink message is received.

It should be understood that in this embodiment of this application, the uplink grant of the RRC uplink response message and the downlink resource assignment (DL assignment) of the RRC downlink message may be sent on a same physical downlink control channel (PDCCH). For example, the network device may send the uplink grant of the RRC uplink response message together with the downlink resource assignment of the RRC downlink message to the UE by using same downlink control information (DCI).

In this embodiment of this application, the uplink grant of the RRC uplink response message and the downlink resource assignment of the RRC downlink message are received in a same message, so that the UE can obtain the uplink grant of the RRC uplink response message before sending the acknowledgement message of the RRC downlink message, thereby saving a time at which the UE waits for the network device to allocate the uplink grant of the RRC uplink response message.

Optionally, in another embodiment, step 920 is specifically implemented as follows: receiving the uplink grant in a message packet for receiving the RRC downlink message.

It should be understood that the message packet may be in a data format of a Medium Access Control (MAC) protocol data unit (PDU).

The MAC PDU includes a character string that is byte (8 bits) aligned. One MAC PDU may include one MAC header, zero to more MAC SDUs, zero to more MAC control elements, and possible padding.

In this embodiment of this application, the RRC downlink message is stored in a MAC service data unit (SDU) in the MAC PDU, and the uplink grant is stored in a MAC control element (CE) in the MAC PDU.

Optionally, in an embodiment, when the RRC downlink message is sent in an AM, the MAC SDU in the message packet stores a segmented data packet obtained after RLC segmentation is performed on the RRC downlink message.

It should be understood that the segmented data packet may be any data packet obtained after the RLC segmentation is performed on the RRC downlink message. For example, the uplink grant may be delivered together with a first packet obtained after the RLC segmentation is performed on the RRC downlink message, or may be delivered together with a last packet obtained after the RLC segmentation is performed on the RRC downlink message.

Alternatively, optionally, in another embodiment, when the RRC downlink message is sent in a TM, the MAC SDU in the message packet stores all content of the RRC downlink message.

It should be understood that when the RRC downlink message is sent in the TM, all the content of the RRC downlink message is transmitted by using a same MAC PDU, and the MAC PDU further carries information about the uplink grant.

In this embodiment of this application, the uplink grant of the RRC uplink response message and the RRC downlink message are received in a same message, so that the UE receives the uplink grant of the RRC uplink response message while receiving the RRC downlink message, thereby saving a time at which the UE waits for the network device to allocate the uplink grant of the RRC uplink response message.

Optionally, when the uplink grant and the RRC downlink message or the downlink resource assignment of the RRC downlink message are sent together, the RRC uplink response message is further used to indicate that receiving of the RRC downlink message is acknowledged, and the network device receives no acknowledgement message of the RRC downlink message.

It should be understood that when the uplink grant and the RRC downlink message or the downlink resource assignment of the RRC downlink message are sent together, a value of the radio resource control procedure delay RRC procedure delay may be 0. Certainly, the value of the radio resource control procedure delay RRC procedure delay may be greater than 0.

It should be understood that when the RRC downlink message is sent in the AM, the RRC downlink message may be an RRC connection resume message, and the RRC uplink response message may be an RRC connection resume complete message; or the RRC downlink message may be an RRC connection reconfiguration message, and the RRC uplink response message may be an RRC connection reconfiguration complete message, or the like. Certainly, there may be another RRC connection process in which an RRC message is transmitted in the AM. Details are not described in this embodiment of this application.

It should be understood that when the RRC downlink message is sent in the TM, the RRC downlink message may be an RRC connection resume message, and the RRC uplink response message may be an RRC connection resume complete message; or the RRC downlink message may be an RRC connection reconfiguration message, and the RRC uplink response message may be an RRC connection reconfiguration complete message, or the like. Similarly, there may be another RRC connection process in which an RRC message is transmitted in the TM. Details are not described in this embodiment of this application.

It should be understood that when the RRC downlink message is sent in the AM, the downlink resource assignment of the RRC downlink message includes a plurality of downlink resource assignments, and the downlink resource assignment carried in the first message may be any one of the plurality of downlink resource assignments.

Alternatively, when the RRC downlink message is sent in the TM, the downlink resource assignment of the RRC downlink message includes one downlink resource assignment, and the uplink grant of the RRC uplink response message is delivered together with the downlink resource assignment.

Certainly, it should be understood that some RRC processes start with an RRC request message. In this case, before step 910, the method may further include: sending an RRC request message.

It should be understood that the RRC request message is corresponding to the RRC downlink message and the RRC uplink response message, and the RRC request message, the RRC downlink message, and the RRC uplink response message belong to RRC process instances of a same RRC transaction identifier. For example, when the RRC downlink message is an RRC connection resume message, and the RRC uplink response message is an RRC connection resume complete message, the RRC request message is an RRC connection resume request message. Alternatively, when the RRC downlink message is an RRC connection setup message, and the RRC uplink response message is an RRC connection setup complete message, the RRC request message is an RRC connection setup request message. Alternatively, when the RRC downlink message is an RRC connection reestablishment message, and the RRC uplink response message is an RRC connection reestablishment complete message, the RRC request message is an RRC connection reestablishment request message, or the like.

For specific implementation of the method shown in FIG. 9, refer to the embodiments shown in FIG. 3 to FIG. 8. Details are not described herein in this embodiment of this application.

Certainly, it should be understood that if the UE does not correctly receive and decode the RRC downlink message, the UE may feed back a NACK message. In this case, the UE does not perform step 930.

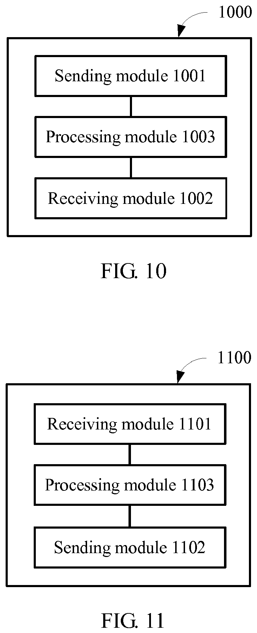

FIG. 10 is a schematic structural diagram of a network device 1000 according to an embodiment of this application. As shown in FIG. 10, the network device 1000 may include a sending module 1001, a processing module 1003, and a receiving module 1002.

The sending module 1001 is configured to send an RRC downlink message.

The processing module 1103 is configured to preallocate, within a time range of an RRC procedure delay of the RRC downlink message, an uplink grant of an RRC uplink response message corresponding to the RRC downlink message.

The sending module 1001 is further configured to send the uplink grant.

The receiving module 1002 is configured to receive, on an uplink resource indicated by the uplink grant, the RRC uplink response message sent by UE from an RRC layer.

In this embodiment of this application, the network device preallocates the uplink grant of the RRC uplink response message within the time range of the RRC procedure delay and sends the uplink grant to the UE, so that when sending the RRC uplink response message, the UE does not need to wait for the network device to allocate the uplink grant. Therefore, a delay generated between receiving the RRC downlink message and feeding back the RRC uplink response message by the UE is reduced, so that a control plane delay can meet a shorter delay requirement.

Optionally, in an embodiment, when a sending time of the uplink grant is later than a sending time of the RRC downlink message, the sending time of the uplink grant is not later than a receiving time of an acknowledgement message of the RRC downlink message.

Optionally, in a specific implementation in this embodiment of this application, when the RRC downlink message is sent in an acknowledged mode (AM), the acknowledgement message of the RRC downlink message is a feedback message at a Radio Link Control (RLC) layer.

Alternatively, optionally, in another specific implementation in this embodiment of this application, when the RRC downlink message is sent in a TM, the acknowledgement message of the RRC downlink message is a feedback message at a Medium Access Control (MAC) layer.

Optionally, in another embodiment, the sending module 1001 is specifically configured to send the uplink grant on a physical downlink control channel (PDCCH) on which a downlink resource assignment (DL assignment) of the RRC downlink message is sent.

In this embodiment of this application, the uplink grant of the RRC uplink response message and the downlink resource assignment of the RRC downlink message are sent to the UE in a same message, so that the UE can obtain the uplink grant of the RRC uplink response message before sending the acknowledgement message of the RRC downlink message, thereby saving a time at which the UE waits for the network device to allocate the uplink grant of the RRC uplink response message.

Optionally, in another embodiment, the sending module 1001 is specifically configured to send the uplink grant in a message packet for sending the RRC downlink message.

It should be understood that the message packet may be in a data format of a Medium Access Control (MAC) protocol data unit (PDU).

The MAC PDU includes a character string that is byte (8 bits) aligned. One MAC PDU may include one MAC header, zero to more MAC SDUs, zero to more MAC control elements, and possible padding.

In this embodiment of this application, the RRC downlink message is stored in a MAC service data unit (SDU) in the MAC PDU, and the uplink grant is stored in a MAC control element (CE) in the MAC PDU.

Optionally, in an embodiment, when the RRC downlink message is sent in an AM, the MAC SDU in the message packet stores a segmented data packet obtained after RLC segmentation is performed on the RRC downlink message.

It should be understood that the segmented data packet may be any data packet obtained after the RLC segmentation is performed on the RRC downlink message. For example, the uplink grant may be delivered together with a first packet obtained after the RLC segmentation is performed on the RRC downlink message, or may be delivered together with a last packet obtained after the RLC segmentation is performed on the RRC downlink message.

Alternatively, optionally, in another embodiment, when the RRC downlink message is sent in a TM, the MAC SDU in the message packet stores all content of the RRC downlink message.

It should be understood that when the RRC downlink message is sent in the TM, all the content of the RRC downlink message is transmitted by using a same MAC PDU, and the MAC PDU further carries information about the uplink grant.

In this embodiment of this application, the uplink grant of the RRC uplink response message and the RRC downlink message are sent to the UE in a same message, so that the UE receives the uplink grant of the RRC uplink response message while receiving the RRC downlink message, thereby saving a time at which the UE waits for the network device to allocate the uplink grant of the RRC uplink response message.

Optionally, when the network device sends the uplink grant together with the RRC downlink message or the downlink resource assignment of the RRC downlink message, the RRC uplink response message is further used to indicate that receiving of the RRC downlink message is acknowledged by the UE, and the UE does not send an acknowledgement message of the RRC downlink message.

It should be understood that when the network device sends the uplink grant together with the RRC downlink message or the downlink resource assignment of the RRC downlink message, a value of the radio resource control procedure delay RRC procedure delay may be 0. Certainly, the value of the radio resource control procedure delay RRC procedure delay may be greater than 0.

It should be understood that when the RRC downlink message is sent in the AM, the RRC downlink message may be an RRC connection resume message, and the RRC uplink response message may be an RRC connection resume complete message; or the RRC downlink message may be an RRC connection reconfiguration message, and the RRC uplink response message may be an RRC connection reconfiguration complete message, or the like. Certainly, there may be another RRC connection process in which an RRC message is transmitted in the AM. Details are not described in this embodiment of this application.

It should be understood that when the RRC downlink message is sent in the TM, the RRC downlink message may be an RRC connection resume message, and the RRC uplink response message may be an RRC connection resume complete message; or the RRC downlink message may be an RRC connection reconfiguration message, and the RRC uplink response message may be an RRC connection reconfiguration complete message, or the like. Similarly, there may be another RRC connection process in which an RRC message is transmitted in the TM. Details are not described in this embodiment of this application.

It should be understood that when the RRC downlink message is sent in the AM, the downlink resource assignment of the RRC downlink message includes a plurality of downlink resource assignments, and the downlink resource assignment carried in the first message may be any one of the plurality of downlink resource assignments.

Alternatively, when the RRC downlink message is sent in the TM, the downlink resource assignment of the RRC downlink message includes one downlink resource assignment, and the uplink grant of the RRC uplink response message is delivered together with the downlink resource assignment.

Certainly, it should be understood that the receiving module 1002 is specifically configured to receive an RRC request message sent by the UE.

After receiving the RRC request message sent by the UE, the network device may send, to the UE, the RRC downlink message corresponding to the RRC request message. Certainly, it should be understood that the network device may actively send the RRC downlink message to the UE. This is not limited in this embodiment of this application.

It should be understood that the RRC request message is corresponding to the RRC downlink message and the RRC uplink response message, and the RRC request message, the RRC downlink message, and the RRC uplink response message belong to RRC process instances of a same RRC transaction identifier. For example, when the RRC downlink message is an RRC connection resume message, and the RRC uplink response message is an RRC connection resume complete message, the RRC request message is an RRC connection resume request message. Alternatively, when the RRC downlink message is an RRC connection setup message, and the RRC uplink response message is an RRC connection setup complete message, the RRC request message is an RRC connection setup request message. Alternatively, when the RRC downlink message is an RRC connection reestablishment message, and the RRC uplink response message is an RRC connection reestablishment complete message, the RRC request message is an RRC connection reestablishment request message, or the like.

The network device 1000 may further perform the method in FIG. 2, and implement functions of the network device in the embodiments shown in FIG. 3 to FIG. 8. Details are not described herein in this embodiment of this application.

FIG. 11 is a schematic structural diagram of user equipment 1100 according to an embodiment of this application. As shown in FIG. 11, the user equipment 1100 may include a receiving module 1101, a processing module 1103, and a sending module 1102.

The receiving module 1101 is configured to receive an RRC downlink message sent by a network device.

The receiving module 1101 is further configured to receive, within a time range of an RRC procedure delay of the RRC downlink message, an uplink grant that is of an RRC uplink response message corresponding to the RRC downlink message and that is preallocated and sent by the network device.

The processing module 1103 is configured to determine an uplink resource indicated by the uplink grant.

The sending module 1102 is configured to send the RRC uplink response message from an RRC layer on the uplink resource indicated by the uplink grant.

In this embodiment of this application, the user equipment receives, within the time range of the RRC procedure delay, the uplink grant that is of the RRC uplink response message and that is preallocated and sent by the network device, so that when sending the RRC uplink response message, the user equipment does not need to wait for the network device to allocate the uplink grant. Therefore, a delay generated between receiving the RRC downlink message and feeding back the RRC uplink response message by the UE is reduced, so that a control plane delay can meet a shorter delay requirement.

Optionally, in an embodiment, when a receiving time of the uplink grant is later than a receiving time of the RRC downlink message, the receiving time of the uplink grant is not later than a sending time of an acknowledgement message of the RRC downlink message.

Optionally, in a specific implementation in this embodiment of this application, when the RRC downlink message is sent in an acknowledged mode (AM), the acknowledgement message of the RRC downlink message is a feedback message at a Radio Link Control (RLC) layer.

Alternatively, optionally, in another specific implementation in this embodiment of this application, when the RRC downlink message is sent in a TM, the acknowledgement message of the RRC downlink message is a feedback message at a Medium Access Control (MAC) layer.

Optionally, in another embodiment, the receiving module 1101 is specifically configured to receive the uplink grant on a physical downlink control channel (PDCCH) on which a downlink resource assignment of the RRC downlink message is received.

It should be understood that in this embodiment of this application, the uplink grant of the RRC uplink response message and the downlink resource assignment (DL assignment) of the RRC downlink message may be sent on a same physical downlink control channel (PDCCH). For example, the network device may send the uplink grant of the RRC uplink response message together with the downlink resource assignment of the RRC downlink message to the UE by using same downlink control information (DCI).

In this embodiment of this application, the uplink grant of the RRC uplink response message and the downlink resource assignment of the RRC downlink message are received in a same message, so that the UE can obtain the uplink grant of the RRC uplink response message before sending the acknowledgement message of the RRC downlink message, thereby saving a time at which the UE waits for the network device to allocate the uplink grant of the RRC uplink response message.

Optionally, in another embodiment, the receiving module 1101 is specifically configured to receive the uplink grant in a message packet for receiving the RRC downlink message.

It should be understood that the message packet may be in a data format of a Medium Access Control (MAC) protocol data unit (PDU).

The MAC PDU includes a character string that is byte (8 bits) aligned. One MAC PDU may include one MAC header, zero to more MAC SDUs, zero to more MAC control elements, and possible padding.

In this embodiment of this application, the RRC downlink message is stored in a MAC service data unit (SDU) in the MAC PDU, and the uplink grant is stored in a MAC control element (CE) in the MAC PDU.

Optionally, in an embodiment, when the RRC downlink message is sent in an AM, the MAC SDU in the message packet stores a segmented data packet obtained after RLC segmentation is performed on the RRC downlink message.

It should be understood that the segmented data packet may be any data packet obtained after the RLC segmentation is performed on the RRC downlink message. For example, the uplink grant may be delivered together with a first packet obtained after the RLC segmentation is performed on the RRC downlink message, or may be delivered together with a last packet obtained after the RLC segmentation is performed on the RRC downlink message.

Alternatively, optionally, in another embodiment, when the RRC downlink message is sent in a TM, the MAC SDU in the message packet stores all content of the RRC downlink message.

It should be understood that when the RRC downlink message is sent in the TM, all the content of the RRC downlink message is transmitted by using a same MAC PDU, and the MAC PDU further carries information about the uplink grant.

In this embodiment of this application, the uplink grant of the RRC uplink response message and the RRC downlink message are received in a same message, so that the UE receives the uplink grant of the RRC uplink response message while receiving the RRC downlink message, thereby saving a time at which the UE waits for the network device to allocate the uplink grant of the RRC uplink response message.

Optionally, when the uplink grant and the RRC downlink message or the downlink resource assignment of the RRC downlink message are sent together, the RRC uplink response message is further used to indicate that receiving of the RRC downlink message is acknowledged, and the network device receives no acknowledgement message of the RRC downlink message.

It should be understood that when the uplink grant and the RRC downlink message or the downlink resource assignment of the RRC downlink message are sent together, a value of the radio resource control procedure delay RRC procedure delay may be 0. Certainly, the value of the radio resource control procedure delay RRC procedure delay may be greater than 0.

It should be understood that when the RRC downlink message is sent in the AM, the RRC downlink message may be an RRC connection resume message, and the RRC uplink response message may be an RRC connection resume complete message; or the RRC downlink message may be an RRC connection reconfiguration message, and the RRC uplink response message may be an RRC connection reconfiguration complete message, or the like. Certainly, there may be another RRC connection process in which an RRC message is transmitted in the AM. Details are not described in this embodiment of this application.

It should be understood that when the RRC downlink message is sent in the TM, the RRC downlink message may be an RRC connection resume message, and the RRC uplink response message may be an RRC connection resume complete message; or the RRC downlink message may be an RRC connection reconfiguration message, and the RRC uplink response message may be an RRC connection reconfiguration complete message, or the like. Similarly, there may be another RRC connection process in which an RRC message is transmitted in the TM. Details are not described in this embodiment of this application.

It should be understood that when the RRC downlink message is sent in the AM, the downlink resource assignment of the RRC downlink message includes a plurality of downlink resource assignments, and the downlink resource assignment carried in the first message may be any one of the plurality of downlink resource assignments.

Alternatively, when the RRC downlink message is sent in the TM, the downlink resource assignment of the RRC downlink message includes one downlink resource assignment, and the uplink grant of the RRC uplink response message is delivered together with the downlink resource assignment.

Certainly, it should be understood that some RRC processes start with an RRC request message. In this case, the sending module 1102 is further configured to send an RRC request message.

It should be understood that the RRC request message is corresponding to the RRC downlink message and the RRC uplink response message, and the RRC request message, the RRC downlink message, and the RRC uplink response message belong to RRC process instances of a same RRC transaction identifier. For example, when the RRC downlink message is an RRC connection resume message, and the RRC uplink response message is an RRC connection resume complete message, the RRC request message is an RRC connection resume request message. Alternatively, when the RRC downlink message is an RRC connection setup message, and the RRC uplink response message is an RRC connection setup complete message, the RRC request message is an RRC connection setup request message. Alternatively, when the RRC downlink message is an RRC connection reestablishment message, and the RRC uplink response message is an RRC connection reestablishment complete message, the RRC request message is an RRC connection reestablishment request message, or the like.

The user equipment 1100 may further perform the method in FIG. 9, and implement functions of the user equipment in the embodiments shown in FIG. 3 to FIG. 8. Details are not described herein in this embodiment of this application.

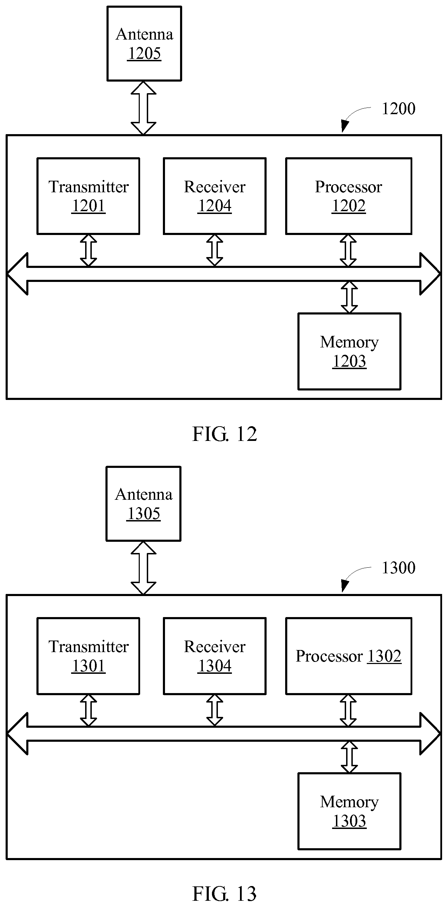

FIG. 12 is a schematic structural diagram of a network device 1200 according to an embodiment of this application. The network device 1200 may include a processor 1202, a transmitter 1201, and a receiver 1204. In specific application, the network device 1200 may be a network device such as a base station.

The receiver 1204, the transmitter 1201, and the processor 1202 are connected to each other by using a bus 1206. The bus 1206 may be an ISA bus, a PCI bus, an EISA bus, or the like. The bus may be classified into an address bus, a data bus, a control bus, and the like. For ease of representation, the bus 1206 is represented by using only one double-headed arrow in FIG. 12. However, it does not mean that there is only one bus or only one type of bus. In specific application, the transmitter 1201 and the receiver 1204 may be coupled to an antenna 1205.

Optionally, the network device 1200 may further include a memory 1203, configured to store a program. Specifically, the program may include program code, and the program code includes a computer operation instruction. The memory 1203 may include a read-only memory and a random access memory, and provide an instruction and data for the processor 1202. The memory 1203 may include a high-speed random access memory (RAM), or may include a non-volatile memory such as at least one magnetic disk storage.

The processor 1202 is configured to perform the following operation. Optionally, the processor 1202 executes the program stored in the memory 1203, and is specifically configured to perform the following operations:
sending an RRC downlink message;
preallocating and sending, within a time range of an RRC procedure delay of the RRC downlink message, an uplink grant of an RRC uplink response message corresponding to the RRC downlink message; and
receiving, on an uplink resource indicated by the uplink grant, the RRC uplink response message sent by UE from an RRC layer.

The foregoing method that is performed by a network device and that is disclosed in the embodiments shown in FIG. 2 to FIG. 8 of this application may be applied to the processor 1202, or may be implemented by the processor 1202. The processor 1202 may be an integrated circuit chip and has a signal processing capability. In an implementation process, steps in the foregoing methods may be implemented by using an integrated logic circuit of hardware in the processor 1202, or an instruction in a form of software. The processor 1202 may be a general purpose processor, including a central processing unit (CPU), a network processor (NP), and the like; or may be a digital signal processor (DSP), an application-specific integrated circuit (ASIC), a field-programmable gate array (FPGA) or another programmable logic device, a discrete gate or a transistor logic device, or a discrete hardware component. The processor 1202 may implement or perform the methods, the steps, and logical block diagrams that are disclosed in the embodiments of this application. The general purpose processor may be a microprocessor, or the processor may be any conventional processor or the like. Steps of the methods disclosed with reference to the embodiments of this application may be directly performed and accomplished by using a hardware decoding processor, or may be performed and accomplished by using a combination of hardware and software modules in the decoding processor. A software module may be located in a mature storage medium in the art, such as a random access memory, a flash memory, a read-only memory, a programmable read-only memory, an electrically erasable programmable memory, a register, or the like. The storage medium is located in the memory 1203, and the processor 1202 reads information in the memory 1203 and completes the steps in the foregoing methods in combination with hardware of the processor 1202.

FIG. 13 is a schematic structural diagram of user equipment 1300 according to an embodiment of this application. The user equipment 1300 may include a processor 1302, a transmitter 1301, and a receiver 1304.

The receiver 1304, the transmitter 1301, and the processor 1302 are connected to each other by using a bus 1306. The bus 1306 may be an ISA bus, a PCI bus, an EISA bus, or the like. The bus may be classified into an address bus, a data bus, a control bus, and the like. For ease of representation, the bus 1306 is represented by using only one double-headed arrow in FIG. 13. However, it does not mean that there is only one bus or only one type of bus. In specific application, the transmitter 1301 and the receiver 1304 may be coupled to an antenna 1305.

Optionally, the user equipment 1300 may further include a memory 1303, configured to store a program. Specifically, the program may include program code, and the program code includes a computer operation instruction. The memory 1303 may include a read-only memory and a random access memory, and provide an instruction and data for the processor 1302. The memory 1303 may include a high-speed random access memory (RAM), or may include a non-volatile memory such as at least one magnetic disk storage.

The processor 1302 is configured to perform the following operation. Optionally, the processor 1302 executes the program stored in the memory 1303, and is specifically configured to perform the following operations:
receiving an RRC downlink message sent by a network device;
receiving, within a time range of an RRC procedure delay of the RRC downlink message, an uplink grant that is of an RRC uplink response message corresponding to the RRC downlink message and that is preallocated and sent by the network device; and
sending the RRC uplink response message from an RRC layer on an uplink resource indicated by the uplink grant.

The foregoing method that is performed by user equipment and that is disclosed in the embodiments shown in FIG. 3 to FIG. 9 of this application may be applied to the processor 1302, or may be implemented by the processor 1302. The processor 1302 may be an integrated circuit chip and has a signal processing capability. In an implementation process, steps in the foregoing methods may be implemented by using an integrated logic circuit of hardware in the processor 1302, or an instruction in a form of software. The processor 1302 may be a general purpose processor, including a central processing unit (CPU), a network processor (NP), and the like; or may be a digital signal processor (DSP), an application-specific integrated circuit (ASIC), a field-programmable gate array (FPGA) or another programmable logic device, a discrete gate or a transistor logic device, or a discrete hardware component. The processor 1302 may implement or perform the methods, the steps, and logical block diagrams that are disclosed in the embodiments of this application. The general purpose processor may be a microprocessor, or the processor may be any conventional processor or the like. Steps of the methods disclosed with reference to the embodiments of this application may be directly performed and accomplished by using a hardware decoding processor, or may be performed and accomplished by using a combination of hardware and software modules in the decoding processor. A software module may be located in a mature storage medium in the art, such as a random access memory, a flash memory, a read-only memory, a programmable read-only memory, an electrically erasable programmable memory, a register, or the like. The storage medium is located in the memory 1303, and the processor 1302 reads information in the memory 1303 and completes the steps in the foregoing methods in combination with hardware of the processor 1302.

An embodiment of this application further proposes a computer readable storage medium. The computer readable storage medium stores one or more programs, and the one or more programs include an instruction. When the instruction is executed by a portable electronic device that includes a plurality of application programs, the portable electronic device performs the method in the embodiment shown in FIG. 2.

An embodiment of this application further proposes another computer readable storage medium. The computer readable storage medium stores one or more programs, and the one or more programs include an instruction. When the instruction is executed by a portable electronic device that includes a plurality of application programs, the portable electronic device performs the method in the embodiment shown in FIG. 7.

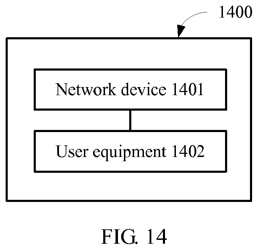

FIG. 14 is a system block diagram of a communications system 1400 according to an embodiment of this application. The communications system 1400 may include a network device 1401 and user equipment 1402. The network device 1401 may be the network device 1000 shown in FIG. 10 or the network device 1200 shown in FIG. 12. The user equipment 1402 may be the user equipment 1100 shown in FIG. 11 or the user equipment 1300 shown in FIG. 13.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit.

When the functions are implemented in the form of a software function unit and sold or used as an independent product, the functions may be stored in a computer readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (ROM), a random access memory (RAM), a magnetic disk, or an optical disc.

The foregoing descriptions are not intended to limit the protection scope of this application. The protection scope of this application shall be subject to the protection scope of the claims.

## Claims

1. A network device, comprising:
• a sending module (1001), configured to send a radio resource control, RRC, downlink message to a user equipment, UE;
• a processing module (1003), configured to preallocate, within a time range of a radio resource control procedure delay, RRC procedure delay, of the RRC downlink message, an uplink grant of an RRC uplink response message corresponding to the RRC downlink message, wherein
• the sending module (1001) is further configured to send the uplink grant within the time range of the RRC procedure delay to the UE; and
• a receiving module (1002), configured to:
∘ receive, on an uplink resource indicated by the uplink grant, the RRC uplink response message on an RRC layer from the UE,
∘ receive an acknowledgement of the RRC downlink message from the UE,
• wherein:
∘ a sending time of the uplink grant is later than a sending time of the RRC downlink message and the sending time of the uplink grant is not later than a receiving time of the acknowledgement message of the RRC downlink message,
∘ when the RRC downlink message is sent in a transparent transmission mode, TM, the acknowledgement message of the RRC downlink message is a feedback message at a Medium Access Control, MAC, layer;
∘ when the RRC downlink message is sent in an acknowledged mode, AM, the acknowledgement message of the RRC downlink message is a feedback message at a Radio Link Control, RLC, layer.

2. User equipment, comprising:
• a receiving module (1101), configured to:
∘ receive a radio resource control, RRC, downlink message sent by a network device,
∘ receive, within a time range of a radio resource control procedure delay, RRC procedure delay, of the RRC downlink message, an uplink grant that is of an RRC uplink response message corresponding to the RRC downlink message and that is preallocated and sent by the network device;
• a processing module (1103), configured to determine an uplink resource indicated by the uplink grant; and
• a sending module (1102), configured to:
∘ send the RRC uplink response message on an RRC layer on the uplink resource indicated by the uplink grant to the network device,
∘ send an acknowledgement of the RRC downlink message to the network device,
• wherein:
∘ a receiving time of the uplink grant is later than a receiving time of the RRC downlink message and the receiving time of the uplink grant is not later than a sending time of the acknowledgement message of the RRC downlink message,
∘ when the RRC downlink message is sent in a transparent transmission mode, TM, the acknowledgement message of the RRC downlink message is a feedback message at a Medium Access Control, MAC, layer; and
∘ when the RRC downlink message is sent in an acknowledged mode, AM, the acknowledgement message of the RRC downlink message is a feedback message at a Radio Link Control, RLC, layer.

3. A message transmission method, comprising:
• sending (210) a radio resource control, RRC, downlink message to a user equipment, UE;
• preallocating (220), within a time range of a radio resource control procedure delay, RRC procedure delay, of the RRC downlink message, an uplink grant of an RRC uplink response message corresponding to the RRC downlink message;
• sending (220) the uplink grant within the time range of the RRC procedure delay to the UE; and
• receiving (230), on an uplink resource indicated by the uplink grant, the RRC uplink response message on an RRC layer from the UE,
• receiving an acknowledgement of the RRC downlink message from the UE,
• wherein:
∘ a sending time of the uplink grant is later than a sending time of the RRC downlink message and the sending time of the uplink grant is not later than a receiving time of the acknowledgement message of the RRC downlink message,
∘ when the RRC downlink message is sent in a transparent transmission mode, TM, the acknowledgement message of the RRC downlink message is a feedback message at a Medium Access Control, MAC, layer;
∘ when the RRC downlink message is sent in an acknowledged mode, AM, the acknowledgement message of the RRC downlink message is a feedback message at a Radio Link Control, RLC, layer.

4. A message transmission method, comprising:
• receiving (910) a radio resource control, RRC, downlink message sent by a network device,
• receiving (920), within a time range of a radio resource control procedure delay, RRC procedure delay, of the RRC downlink message, an uplink grant that is of an RRC uplink response message corresponding to the RRC downlink message and that is preallocated and sent by the network device;
• determining an uplink resource indicated by the uplink grant; and
• sending (930) the RRC uplink response message on an RRC layer on the uplink resource indicated by the uplink grant to the network device,
• send an acknowledgement of the RRC downlink message to the network device,
• wherein:
∘ a receiving time of the uplink grant is later than a receiving time of the RRC downlink message and the receiving time of the uplink grant is not later than a sending time of the acknowledgement message of the RRC downlink message,
∘ when the RRC downlink message is sent in a transparent transmission mode, TM, the acknowledgement message of the RRC downlink message is a feedback message at a Medium Access Control, MAC, layer; and
∘ when the RRC downlink message is sent in an acknowledged mode, AM, the acknowledgement message of the RRC downlink message is a feedback message at a Radio Link Control, RLC, layer.

5. A computer-readable storage medium comprising instructions which, when executed by a computer, cause the computer to carry out the method according to claim 3 or 4.

## Patentansprüche

1. Netzwerkvorrichtung, umfassend:
• ein Sendemodul (1001), das dazu konfiguriert ist, eine Downlink-Nachricht einer Funkressourcensteuerung, RRC, an ein Benutzergerät, UE, zu senden;
• ein Verarbeitungsmodul (1003), das dazu konfiguriert ist, innerhalb eines Zeitbereiches einer Prozedurverzögerung der Funkressourcensteuerung, RRC-Prozedurverzögerung, der RRC-Downlink-Nachricht eine Uplink-Erlaubnis einer RRC-Uplink-Antwortnachricht, die der RRC-Downlink-Nachricht entspricht, vorab zuzuweisen, wobei
• das Sendemodul (1001) ferner dazu konfiguriert ist, die Uplink-Erlaubnis innerhalb des Zeitbereiches der RRC-Prozedurverzögerung an das UE zu senden; und
• ein Empfangsmodul (1002), das zu Folgendem konfiguriert ist:
∘ Empfangen der RRC-Uplink-Antwortnachricht auf einer RRC-Schicht auf einer durch die Uplink-Erlaubnis angegebenen Uplink-Ressource von dem UE,
∘ Empfangen einer Bestätigung der RRC-Downlink-Nachricht von dem UE,
• wobei:
∘ eine Sendezeit der Uplink-Erlaubnis später ist als eine Sendezeit der RRC-Downlink-Nachricht und die Sendezeit der Uplink-Erlaubnis nicht später ist als eine Empfangszeit der Bestätigungsnachricht der RRC-Downlink-Nachricht,
∘ wenn die RRC-Downlink-Nachricht in einem transparenten Übertragungsmodus, TM, gesendet wird, es sich bei der Bestätigungsnachricht der RRC-Downlink-Nachricht um eine Rückkopplungsnachricht an einer Mediumzugriffssteuerungs-, MAC-, Schicht handelt;
∘ wenn die RRC-Downlink-Nachricht in einem bestätigten Modus, AM, gesendet wird, es sich bei der Bestätigungsnachricht der RRC-Downlink-Nachricht um eine Rückkopplungsnachricht an einer Funkverbindungssteuerungs-, RLC-, Schicht handelt.

2. Benutzergerät, umfassend:
• ein Empfangsmodul (1101), das zu Folgendem konfiguriert ist:
∘ Empfangen einer durch eine Netzwerkvorrichtung gesendeten Downlink-Nachricht einer Funkressourcensteuerung, RRC,
∘ Empfangen, innerhalb eines Zeitbereiches einer Prozedurverzögerung der Funkressourcensteuerung, RRC-Prozedurverzögerung, der RRC-Downlink-Nachricht, einer Uplink-Erlaubnis, die von einer RRC-Uplink-Antwortnachricht ist, welche der RRC-Downlink-Nachricht entspricht, und die durch die Netzwerkvorrichtung vorab zugewiesen und gesendet wird;
• ein Verarbeitungsmodul (1103), das dazu konfiguriert ist, eine Uplink-Ressource zu bestimmen, die durch die Uplink-Erlaubnis angegeben wird; und
• ein Sendemodul (1102), das zu Folgendem konfiguriert ist:
∘ Senden der RRC-Uplink-Antwortnachricht auf einer RRC-Schicht auf der Uplink-Ressource, die durch die Uplink-Erlaubnis angegeben wird, an die Netzwerkvorrichtung,
∘ Senden einer Bestätigung der RRC-Downlink-Nachricht an die Netzwerkvorrichtung,
• wobei:
∘ eine Empfangszeit der Uplink-Erlaubnis später ist als eine Empfangszeit der RRC-Downlink-Nachricht und die Empfangszeit der Uplink-Erlaubnis nicht später ist als eine Sendezeit der Bestätigungsnachricht der RRC-Downlink-Nachricht,
∘ wenn die RRC-Downlink-Nachricht in einem transparenten Übertragungsmodus, TM, gesendet wird, es sich bei der Bestätigungsnachricht der RRC-Downlink-Nachricht um eine Rückkopplungsnachricht an einer Mediumzugriffssteuerungs-, MAC-, Schicht handelt; und
∘ wenn die RRC-Downlink-Nachricht in einem bestätigten Modus, AM, gesendet wird, es sich bei der Bestätigungsnachricht der RRC-Downlink-Nachricht um eine Rückkopplungsnachricht an einer Funkverbindungssteuerungs-, RLC-, Schicht handelt.

3. Nachrichtenübertragungsverfahren, umfassend:
• Senden (210) einer Downlink-Nachricht einer Funkressourcensteuerung, RRC, an ein Benutzergerät, UE;
• vorab Zuweisen (220), innerhalb eines Zeitbereiches einer Prozedurverzögerung der Funkressourcensteuerung, RRC-Prozedurverzögerung, der RRC-Downlink-Nachricht, einer Uplink-Erlaubnis einer RRC-Uplink-Antwortnachricht, die der RRC-Downlink-Nachricht entspricht;
• Senden (220) der Uplink-Erlaubnis innerhalb des Zeitbereiches der RRC-Prozedurverzögerung an das UE; und
• Empfangen (230) der RRC-Uplink-Antwortnachricht auf einer RRC-Schicht auf einer durch die Uplink-Erlaubnis angegebenen Uplink-Ressource von dem UE,
• Empfangen einer Bestätigung der RRC-Downlink-Nachricht von dem UE,
• wobei:
∘ eine Sendezeit der Uplink-Erlaubnis später ist als eine Sendezeit der RRC-Downlink-Nachricht und die Sendezeit der Uplink-Erlaubnis nicht später ist als eine Empfangszeit der Bestätigungsnachricht der RRC-Downlink-Nachricht,
∘ wenn die RRC-Downlink-Nachricht in einem transparenten Übertragungsmodus, TM, gesendet wird, es sich bei der Bestätigungsnachricht der RRC-Downlink-Nachricht um eine Rückkopplungsnachricht an einer Mediumzugriffssteuerungs-, MAC-, Schicht handelt;
∘ wenn die RRC-Downlink-Nachricht in einem bestätigten Modus, AM, gesendet wird, es sich bei der Bestätigungsnachricht der RRC-Downlink-Nachricht um eine Rückkopplungsnachricht an einer Funkverbindungssteuerungs-, RLC-, Schicht handelt.

4. Nachrichtenübertragungsverfahren, umfassend:
• Empfangen (910) einer durch eine Netzwerkvorrichtung gesendeten Downlink-Nachricht einer Funkressourcensteuerung, RRC,
• Empfangen (920), innerhalb eines Zeitbereiches einer Prozedurverzögerung der Funkressourcensteuerung, RRC-Prozedurverzögerung, der RRC-Downlink-Nachricht, einer Uplink-Erlaubnis, die von einer RRC-Uplink-Antwortnachricht ist, welche der RRC-Downlink-Nachricht entspricht, und die durch die Netzwerkvorrichtung vorab zugewiesen und gesendet wird;
• Bestimmen einer Uplink-Ressource, die durch die Uplink-Erlaubnis angegeben wird; und
• Senden (930) der RRC-Uplink-Antwortnachricht auf einer RRC-Schicht auf der Uplink-Ressource, die durch die Uplink-Erlaubnis angegeben wird, an die Netzwerkvorrichtung,
• Senden einer Bestätigung der RRC-Downlink-Nachricht an die Netzwerkvorrichtung,
• wobei:
∘ eine Empfangszeit der Uplink-Erlaubnis später ist als eine Empfangszeit der RRC-Downlink-Nachricht und die Empfangszeit der Uplink-Erlaubnis nicht später ist als eine Sendezeit der Bestätigungsnachricht der RRC-Downlink-Nachricht,
∘ wenn die RRC-Downlink-Nachricht in einem transparenten Übertragungsmodus, TM, gesendet wird, es sich bei der Bestätigungsnachricht der RRC-Downlink-Nachricht um eine Rückkopplungsnachricht an einer Mediumzugriffssteuerungs-, MAC-, Schicht handelt; und
∘ wenn die RRC-Downlink-Nachricht in einem bestätigten Modus, AM, gesendet wird, es sich bei der Bestätigungsnachricht der RRC-Downlink-Nachricht um eine Rückkopplungsnachricht an einer Funkverbindungssteuerungs-, RLC-, Schicht handelt.

5. Computerlesbares Speichermedium, das Anweisungen umfasst, die bei Ausführung durch einen Computer den Computer dazu veranlassen, das Verfahren nach Anspruch 3 oder 4 auszuführen.

## Revendications

1. Dispositif réseau, comprenant :
• un module d'envoi (1001), configuré pour envoyer un message de liaison descendante de commande de ressource radio, RRC, à un équipement utilisateur, UE ;
• un module de traitement (1003), configuré pour préallouer, dans une plage de temps d'un retard de procédure de commande de ressource radio, retard de procédure RRC, du message de liaison descendante RRC, une attribution de liaison montante d'un message de réponse de liaison montante RRC correspondant au message de liaison descendante RRC, dans lequel
• le module d'envoi (1001) est en outre configuré pour envoyer l'attribution de liaison montante dans la plage de temps du retard de procédure RRC à l'UE ; et
• un module de réception (1002), configuré pour :
∘ recevoir, sur une ressource de liaison montante indiquée par l'attribution de liaison montante, le message de réponse de liaison montante RRC sur une couche RRC de l'UE,
∘ recevoir un accusé de réception du message de liaison descendante RRC de l'UE,
• dans lequel :
∘ une heure d'envoi de l'attribution de liaison montante est postérieure à une heure d'envoi du message de liaison descendante RRC et l'heure d'envoi de l'attribution de liaison montante n'est pas postérieure à une heure de réception du message d'accusé de réception du message de liaison descendante RRC,
∘ quand le message de liaison descendante RRC est envoyé dans un mode de transmission transparent, TM, le message d'accusé de réception du message de liaison descendante RRC est un message de retour au niveau d'une couche de commande d'accès au support, MAC ;
∘ quand le message de liaison descendante RRC est envoyé dans un mode avec accusé de réception, AM, le message d'accusé de réception du message de liaison descendante RRC est un message de retour au niveau d'une couche de commande de liaison radio, RLC.

2. Équipement utilisateur, comprenant :
• un module de réception (1101), configuré pour :
∘ recevoir un message de liaison descendante de commande de ressource radio, RRC, envoyé par un dispositif réseau,
∘ recevoir, dans une plage de temps d'un retard de procédure de commande de ressource radio, retard de procédure RRC, du message de liaison descendante RRC, une attribution de liaison montante qui est un message de réponse de liaison montante RRC correspondant au message de liaison descendante RRC et qui est préallouée et envoyée par le dispositif réseau ;
• un module de traitement (1103), configuré pour déterminer une ressource de liaison montante indiquée par l'attribution de liaison montante ; et
• un module d'envoi (1102), configuré pour :
∘ envoyer le message de réponse de liaison montante RRC sur une couche RRC sur la ressource de liaison montante indiquée par l'attribution de liaison montante au dispositif réseau,
∘ envoyer un accusé de réception du message de liaison descendante RRC au dispositif réseau,
• dans lequel :
∘ une heure de réception de l'attribution de liaison montante est postérieure à une heure de réception du message de liaison descendante RRC et l'heure de réception de l'attribution de liaison montante n'est pas postérieure à une heure d'envoi du message d'accusé de réception du message de liaison descendante RRC,
∘ quand le message de liaison descendante RRC est envoyé dans un mode de transmission transparent, TM, le message d'accusé de réception du message de liaison descendante RRC est un message de retour au niveau d'une couche de commande d'accès au support, MAC ; et
∘ quand le message de liaison descendante RRC est envoyé dans un mode avec accusé de réception, AM, le message d'accusé de réception du message de liaison descendante RRC est un message de retour au niveau d'une couche de commande de liaison radio, RLC.

3. Procédé de transmission de message, comprenant :
• l'envoi (210) d'un message de liaison descendante de commande de ressources radio, RRC, à un équipement utilisateur, UE ;
• la préallocation (220), dans une plage de temps d'un retard de procédure de commande de ressource radio, retard de procédure RRC, du message de liaison descendante RRC, d'une attribution de liaison montante d'un message de réponse de liaison montante RRC correspondant au message de liaison descendante RRC ;
• l'envoi (220) de l'attribution de liaison montante dans la plage de temps du retard de procédure RRC à l'UE ; et
• la réception (230), sur une ressource de liaison montante indiquée par l'attribution de liaison montante, du message de réponse de liaison montante RRC sur une couche RRC en provenance de l'UE,
• la réception d'un accusé de réception du message de liaison descendante RRC en provenance de l'UE,
• dans lequel :
∘ une heure d'envoi de l'attribution de liaison montante est postérieure à une heure d'envoi du message de liaison descendante RRC et l'heure d'envoi de l'attribution de liaison montante n'est pas postérieure à une heure de réception du message d'accusé de réception du message de liaison descendante RRC,
∘ quand le message de liaison descendante RRC est envoyé dans un mode de transmission transparent, TM, le message d'accusé de réception du message de liaison descendante RRC est un message de retour au niveau d'une couche de commande d'accès au support, MAC ;
∘ quand le message de liaison descendante RRC est envoyé dans un mode avec accusé de réception, AM, le message d'accusé de réception du message de liaison descendante RRC est un message de retour au niveau d'une couche de commande de liaison radio, RLC.

4. Procédé de transmission de message, comprenant :
• la réception (910) d'un message de liaison descendante de commande de ressource radio, RRC, envoyé par un dispositif réseau,
• la réception (920), dans une plage de temps d'un retard de procédure de commande de ressource radio, retard de procédure RRC, du message de liaison descendante RRC, d'une attribution de liaison montante qui est un message de réponse de liaison montante RRC correspondant au message de liaison descendante RRC et qui est préallouée et envoyée par le dispositif réseau ;
• la détermination d'une ressource de liaison montante indiquée par l'attribution de liaison montante ; et
• l'envoi (930) du message de réponse de liaison montante RRC sur une couche RRC sur la ressource de liaison montante indiquée par l'attribution de liaison montante au dispositif réseau,
• envoyer un accusé de réception du message de liaison descendante RRC au dispositif réseau,
• dans lequel :
∘ une heure de réception de l'attribution de liaison montante est postérieure à une heure de réception du message de liaison descendante RRC et l'heure de réception de l'attribution de liaison montante n'est pas postérieure à une heure d'envoi du message d'accusé de réception du message de liaison descendante RRC,
∘ quand le message de liaison descendante RRC est envoyé dans un mode de transmission transparent, TM, le message d'accusé de réception du message de liaison descendante RRC est un message de retour au niveau d'une couche de commande d'accès au support, MAC ; et
∘ quand le message de liaison descendante RRC est envoyé dans un mode avec accusé de réception, AM, le message d'accusé de réception du message de liaison descendante RRC est un message de retour au niveau d'une couche de commande de liaison radio, RLC.

5. Support de stockage lisible par ordinateur comprenant des instructions qui, lorsqu'elles sont exécutées par un ordinateur, amènent l'ordinateur à exécuter le procédé selon la revendication 3 ou 4.
